# EUROPÄISCHE PATENTSCHRIFT

(11) **EP 1 410 010 B1**
(45) Veröffentlichungstag und Bekanntmachung des Hinweises auf die Patenterteilung: **27.10.2010**
(21) Anmeldenummer: 01974171.9
(22) Anmeldetag: 10.08.2001
(51) Int. Cl.: G01N 33/00, B01D 11/04, G01N 25/20

(54) **Verfahren und Vorrichtung zur Regelung des Mengenverhältnisses von Zwei-Komponenten-Medien**
Method and device for controlling the proportion of two-component-media
Procédé et dispositif pour régler la proportion des milieux à deux composants

(30) Priorität: 30.08.2000 DE 10042553
(43) Veröffentlichungstag der Anmeldung: 21.04.2004
(73) Patentinhaber: Air Liquide Deutschland GmbH, 40235 Düsseldorf (DE); Messer Group GmbH, 65843 Sulzbach (DE)
(72) Erfinder: BERGER, Thomas, 45219 Essen (DE); LINGLER, Klaus, 41238 Mönchengladbach (DE); WOITZIK, Norbert, 47803 Krefeld (DE)
(74) Vertreter: Kahlhöfer, Hermann
(86) Internationale Anmeldenummer: PCT/EP2001/009298
(87) Internationale Veröffentlichungsnummer: WO 2002/018932

(56) Entgegenhaltungen:
- EP-A- 0 923 985
- WO-A-95/21688
- DE-A- 3 820 737
- US-A- 5 386 718
- US-A- 5 635 631

## Beschreibung

Die Erfindung betrifft ein Verfahren sowie eine Vorrichtung zur Regelung des Mengenverhältnisses in fluiden trennbaren Zwei-Komponenten-Medien, insbesondere in fluiden Gemischen.

Bei vielen Prozessen besteht die Aufgabe, unter Druck stehende fluide Medien zu lagern oder - unter Beibehaltung oder Änderung des Drucks - zu transportieren. Als "fluide" Medien sollen hier Medien im flüssigen, gasförmigen oder überkritischen Zustand verstanden werden. Handelt es sich dabei um trennbare Medien, also Medien, die mit geeigneten Verfahren in Komponenten unterschiedlichen physikalischen Charakters zerlegt werden können, wie beispielsweise Gemische, ist es häufig von Interesse, das Mengenverhältnis dieses trennbaren Mediums möglichst genau zu kennen oder kontrolliert zu beeinflussen. Beispielsweise kann die Änderung einer Gemischzusammensetzung im Verlauf eines Prozesses wichtige Informationen über die gerade ablaufende Vorgänge liefern, aufgrund derer Eingriffe in den Prozess, wie etwa eine Nachregelung von Stoffströmen oder das Beenden des Prozesses, erforderlich sein können.

Die Bestimmung des Mengenverhältnisses eines unter Druck stehenden, fluiden trennbaren Mediums ist derzeit nur schwer und in aufwändiger Weise zu bewerkstelligen. So kann beispielsweise dem das Medium enthaltenden Druckbehälter eine Probe entnommen werden (wie beispielsweise aus der US 5,635,631 bekannt), deren Zusammensetzung in der Folge analysiert wird. Neben Gefahren für das Bedienpersonal bei der Entnahme eines unter einem Druck von beispielsweise 600 bar vorliegenden und/oder aggressiven Mediums weist diese Methode den Nachteil auf, dass sich die Konsistenz des Mediums durch den Entnahmevorgang verändern kann und somit das Ergebnis der Analyse nur eine begrenzte Aussagekraft hat. Ähnliche Verfahren sind auch bei Proben aus Bohrlöchern offenbart, wie dies beispielsweise US-A-5,635,631 offenbart.

Aufgabe der vorliegenden Erfindung ist es somit, eine Möglichkeit zu schaffen, die eine zuverlässige Regelung des Mengenverhältnisses eines Zwei-Komponenten-Mediums erlaubt.

Gelöst wird diese Aufgabe durch ein Verfahren sowie durch eine Vorrichtung mit dem Merkmalen der jeweiligen unabhängigen Patentansprüche.

Bei dem erfindungsgemäßen Verfahren wird also die infolge des Joule - Thomson-Effektes bei der Entspannung eines fluiden Zwei-Komponenten-Mediums auftretende Temperaturdifferenz dazu ausgenutzt, eine Information über das Mengenverhältnis des fluiden, trennbaren Zwei-Komponenten-Mediums zu erhalten. Bei einem Zwei-Komponenten-Medium, etwa einem Gemisch mit zwei Bestandteilen, besteht ein eindeutiger Zusammenhang zwischen dem Mengenverhältnis der Komponenten und der bei der Entspannung auftretenden Temperaturdifferenz. Diese wird erfasst, indem zumindest die Temperatur des fluiden trennbaren Zwei-Komponenten-Mediums nach der Entspannung an der Entspannungseinrichtung gemessen wird.

Der Zusammenhang zwischen dem Mengenverhältnis eines trennbaren Zwei-Komponenten-Mediums und der bei der Entspannung auftretenden Temperaturdifferenz ist an sich bekannt und wird beispielsweise beim VarioSol^{®} - Verfahren zur Herstellung feinen Fettpulvers ausgenutzt. Bei diesem Verfahren, das ausführlich in dem Artikel von T. Berger, P. Nobis, D. Preis: "VarioSol macht das Essen feiner", gas aktuell 58, S. 13 (2000) beschrieben ist, wird flüssiges Fett mit flüssigem Kohlendioxid gemischt und das Gemisch anschließend über eine Düse entspannt, wobei sich das aus der Düse austretende Fett stark abkühlt. Der Temperaturwert beim Austreten aus der Düse hängt insbesondere vom Mengenverhältnis aus Fett und Kohlendioxid ab und kann, bei vorgegebenen Werten des Drucks und der Temperatur vor der Entspannung sowie einem vorgegebenem Wert des Drucks nach der Entspannung, beispielsweise so gewählt werden, dass die Kristallisationstemperatur des Fetts unterschritten wird. Das aus der Entspannungsdüse austretende Fett kristallisiert also und wird gleichzeitig durch die Expansion des Kohlendioxids zerstäubt.

Die bei der Entspannung eines fluiden, trennbaren Zwei-Komponenten-Mediums auftretende Temperaturdifferenz wurde bislang jedoch noch nicht dazu eingesetzt, Informationen über das Zwei-Komponenten-Medium selbst zu erhalten.

Wie oben bereits erwähnt, spielen die Werte des Drucks und der Temperatur sowohl vor als auch nach dem Entspannungsvorgang eine entscheidende Rolle bei der Ermittlung des Mengenverhältnisses des fluiden trennbaren Zwei-Komponenten-Mediums. Daher ist gemäß einer weiterführenden Ausgestaltung der Erfindung vorgesehen, vor und/oder nach der Entspannung den Druck und/oder vor der Entspannung die Temperatur des fluiden trennbaren Zwei-Komponenten-Mediums zu messen, um eine möglichst genaue Kenntnis dieser Parameter zu erhalten. Dies ist insbesondere dann sinnvoll, wenn sich diese Werte nicht mittelbar aus den Umgebungsbedingungen ergeben, beispielsweise also dann, wenn sich das fluide trennbare Zwei-Komponenten-Medium vor dem Entspannungsprozess nicht im thermischen Gleichgewicht oder nach dem Entspannungsprozess nicht im barometrischen Gleichgewicht mit der Umgebung befindet. Wird das fluide, trennbare Zwei-Komponenten-Medium vor der Entspannung nicht in einem Druckbehälter bereitgehalten, sondern erfolgt die Entspannung mittels einer Mehrstoffdüse, bei der die einzelnen Komponenten des fluiden, trennbaren Zwei-Komponenten-Mediums in getrennten Zuleitungen herangeführt werden, so kann eine Temperatur- oder Druckmessung auch in jeder der Zuleitungen erfolgen.

Vorteilhafterweise ist vorgesehen, den Druck und/oder die Temperatur jeweils kontinuierlich oder in vorgegebenen Zeitabständen zu erfassen. Durch die zeitliche Erfassung einer Druck- bzw. Temperaturänderung und damit des Mengenverhältnisses des Zwei-Komponenten-Mediums können insbesondere Störungen im Betriebsablauf leicht erkannt werden.

Erfindungsgemäß wird die kontinuierlich oder in vorgegebenen Zeitabständen erfasste Temperaturdifferenz und/oder die Information über das Mengenverhältnis des fluiden, trennbaren Zwei-Komponenten-Mediums dabei als Regelgröße für die Aufrechterhaltung oder Änderung des Mengenverhältnisses des fluiden, trennbaren Zwei-Komponenten-Mediums eingesetzt.

Besonders vorteilhaft können dabei insbesondere Stellgrößen, die die Zufuhr einer oder mehrerer Komponenten des fluiden, trennbaren Zwei-Komponenten-Mediums bestimmen, nachgeführt und so der vorherige Wert des Mengenverhältnisses wieder hergestellt oder das Mengenverhältnis in vorbestimmter Weise geändert werden.

Bei der erfindungsgemäßen Vorrichtung ist eine Zweistoffdüse der Entspannungseinrichtung strömungstechnisch vorzuschalten, bei der die das fluide trennbare Zwei-Komponenten-Medium bildenden Komponenten unter Druck herangeführt und anschließend gemeinsam entspannt werden. Für die Temperatur des entspannten fluiden, trennbaren Zwei-Komponenten-Mediums ist eine Messeinrichtung vorgesehen, die strömungstechnisch dem Ausgang der Entspannungsdüse nachgeordnet ist. Ist zur Homogenisierung des entspannten, fluiden, trennbaren Zwei-Komponenten-Mediums der Entspannungsdüse eine Mischkammer o. dergl. nachgeschaltet, kann die Messeinrichtung auch in dieser Mischkammer oder strömungstechnisch im Anschluss an diese vorgesehen sein.

Erfindungsgemäß steht die Messeinrichtung mit einer Steuereinheit in Datenverbindung. In einer solchen Steuereinheit lassen sich die gemessenen Werte mit vorgegebenen oder eingelesenen Werten vergleichen. Hierdurch kann die Prozesskontrolle wirksam unterstützt werden. Insbesondere kann so die Einhaltung von Toleranzgrenzen des Mengenverhältnisses des fluiden, trennbaren Zwei-Komponenten-Mediums überwacht werden, ohne dass der Druckbehälter geöffnet und/oder Proben des Zwei-Komponenten-Mediums entnommen werden müssen.

Die ermittelte Temperaturdifferenz kann insbesondere auch dazu eingesetzt werden, einen Prozess zu regeln, zu starten oder zu beenden. Beispielsweise kann bei Über- oder Unterschreiten eines vorgegebenen Mengenverhältnisses die Zufuhr eines oder mehrerer Komponenten des fluiden, trennbaren Zwei-Komponenten-Mediums gedrosselt oder gesperrt werden. Auch ist vorstellbar, dass bei Erreichen eines bestimmten Mengenverhältnisses der Prozess oder die Entnahme von fluidem, trennbaren Zwei-Komponenten-Medium aus dem Druckbehälter bzw. der Mehrstoffdüse beendet werden soll. Für derartige Fälle ist zweckmäßigerweise vorgesehen, entsprechende Befehle - vorzugsweise automatisch - von der Steuereinrichtung an mit dieser datenverbundene Armaturen, etwa Ventile o. dergl. abzugeben, mit denen sich der jeweilige Stoffstrom beeinflussen lässt.

Anhand der Zeichnung sowie eines Beispiels soll die Erfindung näher erläutert werden.

In schematischer Ansicht zeigt:

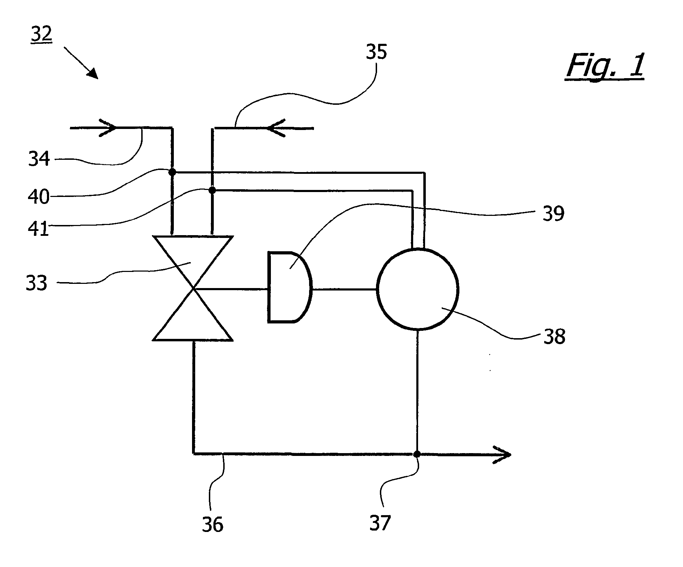

- Fig. 1:: eine Vorrichtung zum Regeln des Mengenverhältnisses eines an einer Zweistoffdüse entspannten fluiden, trennbaren Zwei- Komponenten-Mediums.

Bei der in Fig. 1 gezeigten Vorrichtung 32 werden die das fluide, trennbare Zwei-Komponenten-Medium bildenden Komponenten in einer Zweistoffdüse 33 entspannt. In der Zweistoffdüse 33 strömen die beiden Komponenten für das fluide, trennbare Zwei-Komponenten-Medium, die unter Druck in getrennten Zuführungen 34, 35 herangeführt werden, zusammen und werden unmittelbar darauf entspannt. Das entspannte Zwei-Komponenten-Medium wird in einer Ableitung 36 abgeführt. Die Temperatur des entspannten Zwei-Komponenten-Mediums wird von einem in der Ableitung 36 angeordnetem Messfühler 37 erfasst und einer Steuereinheit 38 übermittelt, in der aus der Druck- und Temperaturdifferenz der Komponenten, bzw. des Zwei-Komponenten-Mediums vor und nach der Entspannung eine Information über das Mengenverhältnis des fluiden Zwei-Komponenten-Mediums gewonnen wird. Die Steuereinheit 38 steht wiederum mit einer Stelleinrichtung 39 in Datenverbindung, mittels welcher, beispielsweise bei Vorliegen eines bestimmten Mengenverhältnisses, das Zweistoffventil 33 geschlossen werden kann. Zur genauen Regelung des Mengenverhältnisses der Komponenten des entspannten, fluiden, trennbaren Zwei-Komponenten-Mediums werden die Temperatur und der Druck in beiden Zuleitungen 34, 35 an entsprechenden Messpunkten 40,41 gemessen und die ermittelten Werte in die Regelung des Mengenverhältnisses des entspannten fluiden, trennbaren Gemisches einbezogen. Die Ermittlung der Temperatur und des Druckes vor der Entspannung kann alternativ hierzu auch im Innern der Zweistoffdüse, beispielsweise unmittelbar nach dem Zusammenführen der Stoffströme der beiden Komponenten, erfolgen.

In einfacher Weise lassen sich durch entsprechende Einbauten auch vorhandene Zweistoffdüsen leicht nachrüsten. Wie im folgenden Beispiel gezeigt, wird die Vorrichtung 32 zur Regelung von Stoffströmen eingesetzt.

### Beispiel: Steuerung von Stoffströmen

Beim VarioSol^{®} - Verfahren wird eine Flüssigkeit und ein Gas, etwa Fett und Kohlendioxid, über getrennte und mit steuerbaren Ventilen ausgerüsteten Zuleitungen einem Druckbehälter oder einer Zweistoffdüse zugeführt, unter Druck gemischt und anschließend entspannt. Die Entspannung des Gases führt zu einer Abkühlung des gesamten Gemisches, vorzugsweise auf einen Temperaturwert, der unterhalb der Kristallisationstemperatur des Fetts liegt. Die bei der Entspannung auftretende Temperaturdifferenz enthält eine Information über das Mengenverhältnis von Gas zu Flüssigkeit. Zur Einhaltung eines bestimmten Mengenverhältnisses kann die Temperatur somit als Regelgröße herangezogen werden. So kann etwa bei einer als zu hoch erkannten Temperaturdifferenz durch Ansteuerung der Ventile in den entsprechenden Zuleitungen der Mengenstrom der zugeführten Flüssigkeit verstärkt und/oder der Mengenstrom des Gases gedrosselt werden.

### Bezugszeichenliste

- 32: Vorrichtung
- 33: Zweistoffdüse
- 34: Zuleitung
- 35: Zuleitung
- 36: Ableitung
- 37: Messfühler
- 38: Steuereinheit
- 39: Stelleinrichtung
- 40: Messpunkt
- 41: Messpunkt

## Patentansprüche

1. Verfahren zur Regelung eines Mengenverhältnisses eines Zwei-Komponenten-Mediums mit zwei Bestandteilen umfassend eine Flüssigkeit und ein Gas, die unter einem Druck gemischt und dann anschließend entspannt werden, wobei die bei der Entspannung in Folge des Joule-Thomsen-Effektes auftretende Temperaturdifferenz bestimmt wird und diese Temperaturdifferenz als Regelgröße für das Mengenverhältnis von Gas zu Flüssigkeit eingesetzt wird.

2. Verfahren nach Anspruch 1, bei dem die Mischung und Entspannung in einer Zweistoffdüse erfolgt.

3. Verfahren nach einem der vorhergehenden Ansprüche, bei dem der Druck und/oder die Temperatur vor der Entspannung bestimmt wird.

4. Verfahren nach einem der vorhergehenden Ansprüche, bei dem der Druck nach der Entspannung bestimmt wird.

5. Vorrichtung (32) zur Regelung eines Mengenverhältnisses eines Zwei-Komponenten-Mediums mit zwei Bestandteilen umfassend eine Flüssigkeit und ein Gas gemäß dem Verfahren nach einem der vorhergehenden Ansprüche, umfassend eine Zweistoffdüse (33) mit Zuführungen (34, 35) zur Zuführung der beiden Komponenten unter Druck und einer Ableitung (36) zur Ableitung des entspannten Zwei-Komponenten-Mediums mit einem Messfühler (37) zur Erfassung der Temperatur des Zwei-Komponenten-Mediums, mit einer Steuereinheit (38), die mit einer Stelleinrichtung (39) zur Betätigung der Zweistoffdüse (33) und dem Messfühler (37) in Datenverbindung steht.

6. Vorrichtung (32) nach Anspruch 5, bei der Messpunkte (40, 41) in den Zuführungen (34, 35) zur Bestimmung von Temperatur und Druck ausgebildet sind.

## Claims

1. Method for controlling a proportion of a two-component medium with two component parts, comprising a liquid and a gas, which are mixed under a pressure and then subsequently allowed to expand, the temperature difference occurring during the expansion as a consequence of the Joule-Thomson effect being determined and this temperature difference being used as a controlled variable for the proportion of gas to liquid.

2. Method according to Claim 1, in which the mixing and expansion take place in a two-substance nozzle.

3. Method according to one of the preceding claims, in which the pressure and/or the temperature before the expansion is determined.

4. Method according to one of the preceding claims, in which the pressure after the expansion is determined.

5. Device (32) for controlling a proportion of a two-component medium with two component parts comprising a liquid and a gas by the method according to one of the preceding claims, comprising a two-substance nozzle (33) with feeds (34, 35) for feeding the two components under pressure and a discharge (36) for discharging the expanded two-component medium with a measuring sensor (37) for detecting the temperature of the two-component medium and with a control unit (38), which is in data connection with a final control device (39) for actuating the two-substance nozzle (33) and with the measuring sensor (37).

6. Device (32) according to Claim 5, in which measuring points (40, 41) are formed in the feeds (34, 35) for determining temperature and pressure.

## Revendications

1. Procédé de régulation des proportions des composants d'un fluide à deux composants comprenant un liquide et un gaz mélangés sous pression et ensuite détendus, dans lequel la différence de température qui résulte de l'effet de Joule-Thomsen lors de la détente est déterminée et cette différence de température est utilisée comme grandeur de régulation de la proportion entre la quantité de gaz et la quantité de liquide.

2. Procédé selon la revendication 1, dans lequel le mélange et la détente ont lieu dans une tuyère à deux matières.

3. Procédé selon l'une des revendications précédentes, dans lequel la pression et/ou la température sont déterminées avant la détente.

4. Procédé selon l'une des revendications précédentes, dans lequel la pression est déterminée après la détente.

5. Dispositif (32) de la régulation des proportions des composants d'un fluide à deux composants comprenant un liquide et un gaz par le procédé selon l'une des revendications précédentes, comprenant une tuyère (33) à deux matières dotée d'amenées (34, 35) qui amènent les deux composants sous pression et d'un conduit d'évacuation (36) qui évacue le fluide à deux composants détendu, et comprenant une sonde de mesure (37) qui détermine la température du fluide à deux composants et une unité de commande (38) qui échange des données avec un dispositif de réglage (39) qui actionne la tuyère (33) à deux matières et la sonde de mesure (37).

6. Dispositif (32) selon la revendication 5, dans lequel des points de mesure (40, 41) permettant de déterminer la température et la pression sont formés dans les amenées (34, 35).
